# EUROPÄISCHE PATENTSCHRIFT

(11) **EP 3 207 430 B1**
(45) Veröffentlichungstag und Bekanntmachung des Hinweises auf die Patenterteilung: **17.04.2019**
(21) Anmeldenummer: 15802021.4
(22) Anmeldetag: 24.11.2015
(51) Int. Cl.: G05B 19/042, G05B 19/05, G06F 1/32, G06Q 50/04

(54) **VORRICHTUNG ZUM KOORDINIERTEN STEUERN EINES BETRIEBSZUSTANDES EINER PRODUKTIONSANLAGE SOWIE PRODUKTIONSSYSTEM UND VERFAHREN**
METHOD FOR COORDINATED CONTROL OF AN OPERATING STATE OF A PRODUCTION PLANT, AND PRODUCTION SYSTEM AND METHOD
DISPOSITIF POUR LA COMMANDE COORDONNÉE D'UN ÉTAT DE FONCTIONNEMENT D'UNE INSTALLATION DE PRODUCTION AINSI QUE SYSTÈME DE PRODUCTION ET PROCÉDÉ

(30) Priorität: 16.12.2014 DE 102014226075
(43) Veröffentlichungstag der Anmeldung: 23.08.2017
(73) Patentinhaber: Siemens Aktiengesellschaft, 80333 München (DE)
(72) Erfinder: MOHSEN, Amjad, 91052 Erlangen (DE); JUNGNICKEL, Frank, 91094 Bräuningshof/Langensendelbach (DE); PESCHKE, Jörn, 90489 Nürnberg (DE)
(86) Internationale Anmeldenummer: PCT/EP2015/077485
(87) Internationale Veröffentlichungsnummer: WO 2016/096334

(56) Entgegenhaltungen:
- EP-A1- 2 192 458
- EP-A1- 2 244 142
- EP-A1- 2 455 827
- WO-A1-2010/034333
- WO-A1-2013/044964
- WO-A1-2013/131556

## Beschreibung

Die Erfindung betrifft eine Vorrichtung zum koordinierten Steuern eines Betriebszustandes zumindest einer Komponente einer Produktionsanlage, mit einer Energiekontrolleinrichtung zum Bereitstellen eines Zustandsänderungssignals zum Ändern des Betriebszustandes der zumindest einen Komponente von einem ersten Betriebszustand in einen zweiten Betriebszustand. Die Erfindung betrifft außerdem ein Produktionssystem sowie ein Verfahren.

Produktionssysteme bzw. Industrieanlagen sind aus dem Stand der Technik bekannt und werden üblicherweise zum automatisierten Fertigen von Produkten und zum automatisierten Durchführen von Prozessen eingesetzt. Solche automatisierten Produktionssysteme bzw. Industrieanlagen umfassen normalerweise mehrere Komponenten, beispielsweise Maschinen. Diese Komponenten können für erhebliche Zeiträume während der Produktion still liegen bzw. leerlaufen. Solche Leerlaufzeiträume entstehen einerseits durch geplante und andererseits durch unvorhersehbare Ereignisse. Geplante Ereignisse sind beispielsweise eine Wartung einer oder mehrerer Komponenten der Industrieanlage, Pausen oder Ferienzeiten. Unvorhersehbare Ereignisse sind normalerweise Störungen oder Defekte in der Industrieanlage. Leerlaufzeiträume können außerdem durch zeitweise unterschiedliche Belastungen einer oder mehrerer Komponenten des Produktionssystems verursacht werden. Während dieser Leerlaufzeiträume verbrauchen die Komponenten jedoch üblicherweise eine erhebliche Menge an Energie.

Um die Menge an Energie während der Leerlaufzeiträume zu reduzieren und dadurch die Energieeffizienz der kompletten Industrieanlage zu steigern, sind aus dem Stand der Technik Energiekontrolleinrichtungen bekannt. Eine solche Energiekontrolleinrichtung, ein sogenannter Energieschaltcontroller (ESC), ist in der WO 2013/044964 A1 gezeigt und dient zum Energieeffizienzmanagement der Industrieanlage. Dabei versetzt der ESC basierend auf einem industrieanlagenspezifischen Strukturmodell die Komponenten der Industrieanlage mittels koordinierter und sicherer Zustandsänderungen in bestimmte Betriebszustände, in welchen die Komponenten möglichst wenig Energie verbrauchen. Ein solcher Betriebszustand kann beispielsweise ein An-Zustand, ein Aus-Zustand oder ein Standby-Zustand sein.

Außerdem kann der ESC eine Kommunikationsschnittstelle für die Kommunikation mit einem übergeordneten Kontrollsystem umfassen. Ein solches übergeordnetes Kontrollsystem kann beispielsweise ein Fertigungsmanagementsystem (Management Execution System - MES), ein Produktionskontrollsystem, ein Prozessüberwachungs- und steuerungssystem (Supervisory Control and Data Acquisition - SCADA) oder ein Lastmanagementsystem sein. Jedoch sind das übergeordnete Kontrollsystem und der ESC nicht notwendigerweise zusammenwirkend entwickelt. Somit kann eine komplette Synchronisation zwischen beiden Systemen nicht zu jeder Zeit, vor allem während der Zeiträume unterschiedlicher Belastungen, gewährleistet werden. Ziel des übergeordneten Kontrollsystems ist es, eine Befehlsfolge für die Komponenten zu generieren, um einen koordinierten, sicheren und spitzenleistungsorientierten Produktionsablauf zu sichern. Hingegen ist es das Ziel des Energieschaltcontrollers, einen möglichst energieeffizienten Betriebszustand der Komponenten innerhalb eines Zeitraumes bereitzustellen, in welchem eine Nutzung der Komponente nicht erwartet wird. Unterbricht der ESC dabei die Befehlsfolge des übergeordneten Kontrollsystems, so führen diese widersprüchlichen Zustandsänderungssignale des übergeordneten Kontrollsystems und des Energieschaltcontrollers zu unkontrollierbaren Konflikten innerhalb des automatisierten Produktionssystems. So kann es beispielsweise sein, dass der ESC während einer unvorhersehbaren, aufgrund von Störungen verursachten Pause einen Befehl bzw. ein Zustandsänderungssignal bereitstellt, durch welches die betroffenen Komponenten in den Standby-Zustand oder den Aus-Zustand gebracht werden. Falls die Störung durch ein defektes Bauteil oder ein fehlendes Werkstück verursacht wird, ist die Dauer der Pause normalerweise unbekannt. Sobald die Störung beseitigt worden ist, wird durch das übergeordnete Kontrollsystem eine Reaktivierung der Industrieanlage bzw. der betroffenen Komponente eingeleitet. Diese Zustandsänderungssignale des übergeordneten Kontrollsystems sind dem Energieschaltcontroller in der Regel nicht bekannt. Der ESC fordert daraufhin möglicherweise weitere Zustandsänderungen an, welche zu den neuen Betriebszuständen, die durch das übergeordnete Kontrollsystem bereitgestellt sind, widersprüchlich sein können.

Auch kann das übergeordnete Kontrollsystem oder ein Betreiber der Industrieanlage während geplanter Pausen der Industrieanlage Befehle an die Komponenten senden, um beispielsweise einen Produktionsprozess zu starten. Dadurch ändert sich der aktuelle Betriebszustand der entsprechenden Komponenten in der Anlage, ohne dass der ESC darüber informiert wird. Zudem können die Komponenten der Industrieanlage und/oder die übergeordnete Kontrolleinrichtung Energiesparfunktionen aufweisen, durch welche die Komponenten beispielsweise in einen Standby-Modus versetzt werden können. Diese durch die Energiesparfunktionen hervorgerufenen Zustandsänderungen werden dem ESC üblicherweise ebenfalls nicht kommuniziert.

All diese beschriebenen Situationen können zu Befehlskonflikten führen, durch welche der ESC in einen undefinierten Zustand versetzt werden kann. Die Folgen eines solchen Konflikts können beispielsweise wirtschaftlichen Einbußen sowie eine Funktionsuntüchtigkeit des Energieschaltcontrollers sein, sodass dieser keine Energiesparmaßnahmen durchführen kann. Außerdem können die Konflikte eine Unterbrechung des Betriebs der kompletten Industrieanlage oder des kompletten Produktionssystems auslösen, falls das Zustandsänderungssignal bzw. der Befehl des Energieschaltcontrollers den verlangten Betriebszustand des übergeordneten Kontrollsystems überschreibt.

Aus der Druckschrift WO 2013/131556 A1 sind ein Verfahren und eine Vorrichtung zur energieeffizienten Steuerung einer Anlage bekannt. Eine zentrale Steuerung steuert mehrere Komponenten bezüglich Zustandsänderungen. Jede Komponente entscheidet für sich über die Möglichkeit der Durchführung der jeweiligen Zustandsänderung.

Außerdem offenbart die Druckschrift WO 2010/034333 A1 ein Verfahren zum Betreiben einer industrietechnischen Anlage. Zur Energieeinsparung können Komponenten in einen energiesparenden Ruhezustand versetzt werden. Dazu können die Komponenten zumindest teilweise abgeschaltet werden.

Ferner beschreibt die Druckschrift EP 2 455 827 A1 ein Feldgerät mit einem Energiesparmodus. Dieser Energiesparmodus ist beispielsweise mit Hilfe einer Steuerung aus einem Betriebsmodus heraus aktivierbar und lokal mittels eines Eingabemittels wieder deaktivierbar oder umgekehrt.

Es ist Aufgabe der vorliegenden Erfindung, eine Lösung bereitzustellen, durch welche ein sicherer, konfliktfreier und kontrollierter Produktionsablauf einer Produktionsanlage realisiert werden kann.

Diese Aufgabe wird erfindungsgemäß durch eine Vorrichtung, ein Produktionssystem sowie ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Vorrichtung dient zum Steuern eines jeweiligen Betriebszustandes mehrerer Komponenten einer Produktionsanlage. Die Vorrichtung umfasst unter anderem eine Energiekontrolleinrichtung zum Bereitstellen eines Zustandsänderungssignals zum Ändern des Betriebszustandes der entsprechenden Komponente von einem ersten Betriebszustand in einen zweiten Betriebszustand. Darüber hinaus weist die Vorrichtung eine Überwachungseinrichtung auf.

Die Energiekontrolleinrichtung kann als der bereits beschriebene Energieschaltcontroller ausgeführt sein, welcher beispielsweise basierend auf einem Strukturmodell der Produktionsanlage Zustandsänderungen bzw. Zustandsübergänge der zumindest einen Komponente durch Bereitstellen eines Zustandsänderungssignals herbeiführen kann. Die Betriebszustände der zumindest einen Komponente können beispielsweise ein Aus-Zustand, ein An-Zustand, ein Standby-Zustand, ein Volllast-Betriebszustand oder ein Teillast-Betriebszustand sein. Insbesondere unterscheidet sich ein Energieverbrauch der zumindest einen Komponente innerhalb der verschiedenen Betriebszustände.

Erfindungsgemäß ist es nun vorgesehen, dass die Überwachungseinrichtung bereitgestellt und mit der Energiekontrolleinrichtung gekoppelt ist, sodass die Überwachungseinrichtung das Zustandsänderungssignal der Energiekontrolleinrichtung empfangen kann. Insbesondere wird der zumindest einen Komponente das Zustandsänderungssignal der Energiekontrolleinrichtung nicht mehr direkt von der Energiekontrolleinrichtung bereitgestellt. Das Zustandsänderungssignal wird zuerst zu der Überwachungseinrichtung übertragen, welche das Zustandsänderungssignal der Energiekontrolleinrichtung überprüft. Die Überwachungseinrichtung, welche auch als vereinheitlichte Energiemanagementschnittstelle (Energy Management Unified Interface - EMUnI) bezeichnet wird, leitet das Zustandsänderungssignal der Energiekontrolleinrichtung entweder unverändert an die zumindest eine Komponente weiter, sodass der von der Energiekontrolleinrichtung vorgesehene Wechsel von dem ersten in den zweiten Betriebszustand vollzogen wird, oder modifiziert das Zustandsänderungssignal derart, dass der von der Energiekontrolleinrichtung vorgesehene Wechsel von dem ersten in den zweiten Betriebszustand vollzogen werden kann, oder blockiert das Zustandsänderungssignal der Energiekontrolleinrichtung, sodass der erste Betriebszustand der zumindest einen Komponente nicht verändert wird und die zumindest eine Komponente in dem ersten Betriebszustand verbleibt.

Durch die Überwachungseinrichtung kann somit in vorteilhafter Weise ein kontrollierter, sicherer und konfliktfreier Betrieb der Produktionsanlage gewährleistet werden.

Gemäß einer Ausführungsform der Erfindung ist die Überwachungseinrichtung dazu ausgelegt, einen zu dem zweiten Betriebszustand alternativen dritten Betriebszustand bereitzustellen, falls die Überwachungseinrichtung das Zustandsänderungssignal der Energiekontrolleinrichtung blockiert. Die Überwachungseinrichtung ist also dazu ausgelegt, das Zustandsänderungssignal der Energiekontrolleinrichtung durch ein anderes alternatives Zustandsänderungssignal zu ersetzen, durch welches die zumindest eine Komponente in den dritten Betriebszustand versetzt wird. Somit kann die Überwachungseinrichtung, beispielsweise bei einem Befehlskonflikt, einen anderen Betriebszustand bereitstellen. Die Vorrichtung ist somit besonders flexibel gestaltet.

Besonders bevorzugt ist die Überwachungseinrichtung dazu ausgelegt, der Energiekontrolleinrichtung zum Synchronisieren der Energiekontrolleinrichtung mit der zumindest einen Komponente einen aktuellen Betriebszustand der zumindest einen Komponente bereitzustellen. Insbesondere falls die Überwachungseinrichtung das Signal der Steuereinrichtung blockiert hat und/oder falls die Überwachungseinrichtung den alternativen dritten Betriebszustand für die zumindest eine Komponente bereitgestellt hat und/oder falls die zumindest eine Komponente eine eigene Energiesparfunktion aufweist, durch welche der Betriebszustand der zumindest einen Komponente verändert wurde, wird der Energiekontrolleinrichtung der aktuelle Betriebszustand der zumindest einen Komponente von der Überwachungseinrichtung übermittelt. Gemäß dem Stand der Technik ist diese Rückmeldung nicht erfolgt, sodass die Energiekontrolleinrichtung beim Bereitstellen von neuen Zustandsänderungssignalen von einem falschen, aktuellen Betriebszustand ausgegangen ist und dadurch in einen undefinierten Zustand versetzt wurde.

Zur Kommunikation mit der Energiekontrolleinrichtung kann die Überwachungseinrichtung beispielsweise eine bidirektionale Kommunikationsschnittstelle aufweisen. Über diese Kommunikationsschnittstelle kann die Überwachungseinrichtung der Energiekontrolleinrichtung den aktuellen Betriebszustand der Komponente mitteilen. Dabei kann die Überwachungseinrichtung beispielsweise den aktuellen Betriebszustand der zumindest einen Komponente auslesen, um der Energiekontrolleinrichtung mitzuteilen, dass der Betriebszustand der zumindest einen Komponente durch die komponenteneigene Energiesparfunktion geändert wurde. Auch kann es vorgesehen sein, dass die Überwachungseinrichtung der Energiekontrolleinrichtung ein Signal bereitstellt, durch welches die Überwachungseinrichtung der Energiekontrolleinrichtung mitteilt, dass die Überwachungseinrichtung das Zustandsänderungssignal der Energiekontrolleinrichtung blockiert hat und sich die zumindest eine Komponente also nach wie vor in dem ersten Betriebszustand befindet, und/oder dass die Überwachungseinrichtung das Zustandsänderungssignal der Energiekontrolleinrichtung modifiziert hat und sich die zumindest eine Komponente nun in dem dritten Betriebszustand befindet.

Somit kann in vorteilhafter Weise gewährleistet werden, dass die Energiekontrolleinrichtung dauerhaft mit der zumindest einen Komponente synchronisiert bleibt. Somit kann verhindert werden, dass die Energiekontrolleinrichtung beim Bereitstellen von weiteren Zustandsänderungssignalen von einem falschen aktuellen Betriebszustand ausgeht und in den undefinierten Zustand versetzt wird. Dadurch kann jederzeit ein definierter Zustand für die Energiekontrolleinrichtung und ein konfliktfreier Betrieb der Produktionsanlage bereitgestellt werden.

Es kann vorgesehen sein, dass die Überwachungseinrichtung dazu ausgelegt ist, das Zustandsänderungssignal der Energiekontrolleinrichtung zu blockieren, falls das Ändern des ersten Betriebszustandes in den zweiten Betriebszustand als eine unerlaubte und/oder als eine unmögliche Zustandsänderung vorgegeben ist. Eine unerlaubte und/oder unmögliche Zustandsänderung versetzt die zumindest eine Komponente in einen unerlaubten und/oder unmöglichen Betriebszustand. Ein unerlaubter und/oder unmöglicher Betriebszustand ist ein Betriebszustand, welcher für die zumindest eine Komponente nicht vorgesehen ist und/oder welcher für die zumindest eine Komponente nicht erreichbar ist. Diese unmöglichen und/oder unerlaubten Zustandsänderungen können beispielsweise in einer Liste gespeichert sein, basierend auf welcher die Überwachungseinrichtung das Zustandsänderungssignal der Energiekontrolleinrichtung blockieren kann.

Eine Ausgestaltung der Erfindung sieht vor, dass die Vorrichtung eine übergeordnete Kontrolleinrichtung aufweist, welche dazu ausgelegt ist, ein weiteres Zustandsänderungssignal bereitzustellen, und die Überwachungseinrichtung dazu ausgelegt ist, mit der übergeordneten Kontrolleinrichtung zu kommunizieren. Dazu kann die Überwachungseinrichtung eine Kommunikationsschnittstelle zur Kommunikation mit der übergeordneten Kontrolleinrichtung aufweisen. Über diese Kommunikationsschnittstelle kann die Überwachungseinrichtung das weitere Zustandsänderungssignal der übergeordneten Kontrolleinrichtung empfangen. Die Überwachungseinrichtung ist also dazu ausgelegt, die Zustandsänderungssignale der Energiekontrolleinrichtung und der übergeordneten Kontrolleinrichtung zu empfangen. Somit kann ein Zustandswechsel der zumindest einen Komponente durch die Überwachungseinrichtung koordiniert werden.

Es kann vorgesehen sein, dass die Überwachungseinrichtung dazu ausgelegt ist, das Zustandsänderungssignal der Energiekontrolleinrichtung bereitzustellen und das weitere Zustandsänderungssignal der übergeordnete Kontrolleinrichtung zu blockieren, falls das Zustandsänderungssignal der Energiekontrolleinrichtung eine vorgegebene, höhere Priorität als das weitere Zustandsänderungssignal der übergeordneten Kontrolleinrichtung aufweist, und das weitere Zustandsänderungssignal der übergeordneten Kontrolleinrichtung bereitzustellen und das Zustandsänderungssignal der Energiekontrolleinrichtung zu blockieren, falls das weitere Zustandsänderungssignal der übergeordneten Kontrolleinrichtung die vorgegebene höhere Priorität aufweist. Es kann dabei für jedes Zustandsänderungssignal der Energiekontrolleinrichtung eine Priorität vorgegeben werden. Dem Zustandsänderungssignal des Energiekontrollsystems kann also bei einem Konflikt mit dem weiteren Zustandsänderungssignal der übergeordneten Kontrolleinrichtung eine höhere/niedrigere Priorität zugewiesen werden als dem Zustandsänderungssignal der übergeordneten Kontrolleinrichtung und daraufhin das Zustandsänderungssignal der Energiekontrolleinrichtung weitergeleitet/blockiert werden. Diese Priorität kann beispielsweise einmalig bei einem Hochfahren der Produktionsanlage festgelegt werden oder dynamisch durch den Betreiber der Produktionsanlage verändert werden.

Die Überwachungseinrichtung bzw. EMUnI prüft und koordiniert also alle Zustandswechsel, um eine Konfliktfreiheit der Befehle der Energiekontrolleinrichtung mit den Befehlen des übergeordneten Kontrollsystems zu garantieren.

In einer Weiterbildung der Erfindung ist die Überwachungseinrichtung dazu ausgelegt, die Energiekontrolleinrichtung zum Blockieren des Zustandsänderungssignals zu deaktivieren und/oder zum Bereitstellen des Zustandsänderungssignals zu aktivieren. Dazu kann die Energiekontrolleinrichtung bzw. der ESC zeitweise, also über einen gewissen Zeitraum, deaktiviert werden, beispielsweise bei Konflikten zwischen der Energiekontrolleinrichtung und der übergeordneten Kontrolleinrichtung und/oder auf Verlangen der übergeordneten Kontrolleinrichtung bei einer Störung. Während dieses Zeitraums kann die Energiekontrolleinrichtung in einem Ruhezustand oder in einem synchronisationsfähigen Zustand, einem sogenannten "keep-synchronized"-Zustand, betrieben werden. Während des "keep-synchronized"-Zustandes kann die Überwachungseinrichtung alle von der Energiekontrolleinrichtung bereitgestellten Zustandsänderungssignale ignorieren und der Energiekontrolleinheit, beispielsweise nach einem Zustandswechsel bzw. einer Zustandsänderung, den aktuellen Betriebszustand der zumindest einen Komponente bereitstellen. Außerdem kann die Überwachungseinrichtung dazu ausgelegt sein, der Energiekontrolleinrichtung bei einer bekannten Zeitdauer des "keep-synchronized"-Zustandes die Zeitdauer des "keep-synchronized"-Zustandes zu kommunizieren oder bei einer unbekannten Zeitdauer des "keep-synchronized"-Zustandes ein uneingeschränktes Wartesignal zu kommunizieren. Somit kann die Energiekontrolleinrichtung in vorteilhafter Weise ohne einen Synchronisationsverlust von der Produktionsanlage isoliert werden.

Sobald der Konflikt bzw. die Störung behoben ist und die Produktionsanlage wieder funktionstüchtig ist, kann die Überwachungseinrichtung die Energiekontrolleinrichtung wieder aktivieren, also einen ESC-Reset einleiten.

Gemäß einer vorteilhaften Ausführungsform der Erfindung ist die Energiekontrolleinrichtung nach der Aktivierung dazu ausgelegt, den aktuellen Betriebszustand der zumindest einen Komponente auszulesen. Wenn die Energiekontrolleinrichtung also beispielsweise von der Überwachungseinrichtung deaktiviert wurde und anschließend wieder reaktiviert wurde, so kann die Energiekontrolleinrichtung durch das Auslesen wieder synchronisiert werden, also über den aktuellen Zustand der zumindest einen Komponente informiert werden.

Es erweist sich als vorteilhaft, wenn die Überwachungseinrichtung dazu ausgelegt ist, eine Zustandsänderungszeit der Zustandsänderung von dem ersten Betriebszustand in den zweiten Betriebszustand zu überwachen, und, falls die Zustandsänderungszeit einen vorbestimmten Schwellwert überschreitet, das zugehörige Zustandsänderungssignal als ein unmögliches und/oder unerlaubtes Zustandsänderungssignal festzulegen. Der vorgegeben Schwellwert kann beispielsweise eine komponentenspezifische Schaltverzögerung und/oder eine komponentenspezifische Reaktionszeit sein, welche insbesondere abhängig ist von der jeweiligen Komponente der Produktionsanlage sowie von den zwei Betriebszuständen, zwischen denen die jeweilige Komponente wechseln soll. Komponentenspezifische Schwellwerte zu jeder Komponente können beispielsweise in einer Liste hinterlegt sein. Eine von der Überwachungseinrichtung erfasste Zustandsänderungszeit, welche den zugehörigen Schwellwert überschreitet, kann beispielsweise auf einen Defekt oder eine Störung in der Produktionsanlage oder in der jeweiligen Komponente hindeuten. Die Überwachungseinrichtung kann nun dieses Zustandsänderungssignal, durch welches der Schwellwert bei der Zustandsänderung überschritten wird, als ein unmögliches und/oder unerlaubtes Zustandsänderungssignal festlegen, sodass dieses beim erneuten Bereitstellen durch die Energiekontrolleinrichtung von der Überwachungseinrichtung blockiert und/oder durch ein alternatives Zustandsänderungssignal ersetzt wird. Die Vorrichtung ist somit besonders sicher und flexibel gestaltet. Außerdem kann durch die Überwachungseinrichtung eine frühzeitige Ermittlung von Fohlfunktionen der verschiedenen Komponenten der Produktionsanlage erfolgen.

Vorzugsweise ist die Überwachungseinrichtung dazu ausgelegt, zum Modifizieren des Zustandsänderungssignals der Energiekontrolleinrichtung zumindest einen Zwischenbetriebszustand bereitzustellen, falls der zweite Betriebszustand von dem ersten Betriebszustand aus nur über den zumindest einen Zwischenbetriebszustand erreichbar ist. Dazu können beispielsweise mögliche und/oder erlaubte Zustandsänderungen in einer Liste hinterlegt sein. Bei einem durch die Energiekontrolleinrichtung bereitgestellten Zustandsänderungssignal, durch welches der erste Betriebszustand der zumindest einen Komponente in den zweiten Betriebszustand geändert wird, kann die Überwachungseinrichtung anhand der Liste überprüfen, ob der zweite Betriebszustand direkt oder über den zumindest einen Zwischenbetriebszustand erreichbar ist. Wenn der zweite Betriebszustand nur über den zumindest einen Zwischenbetriebszustand erreichbar ist, so kann die Überwachungseinrichtung das Zustandsänderungssignal der Energiekontrolleinrichtung derart modifizieren, dass die zumindest eine Komponente den ersten Betriebszustand zuerst in den zumindest einen Zwischenbetriebszustand und danach in den zweiten Betriebszustand verändert. Somit kann in vorteilhafter Weise ein durch die Energiekontrolleinrichtung vorgesehener Betriebszustand für die zumindest eine Komponente bereitgestellt werden.

In einer Ausgestaltung der Erfindung ist die Überwachungseinrichtung dazu ausgelegt, das Zustandsänderungssignal zum Durchführen eines Testzyklus zu modifizieren. Ein solcher Testzyklus kann beispielsweise zur Energieverbrauchsoptimierung dienen. Die Überwachungseinrichtung kann mittels des Testzyklus prüfen, ob beispielsweise der Wechsel von dem ersten Betriebszustand über einen Zwischenbetriebszustand in den zweiten Betriebszustand energetisch günstiger ist als der direkte Wechsel von dem ersten in den zweiten Betriebszustand. Gemäß dem Stand der Technik musste zum Überprüfen der Energieeffizienz die Energiekontrolleinrichtung aufwändig umprogrammiert werden. Erfindungsgemäß kann die Energieeffizienzüberprüfung auf einfache Weise durch die Überwachungseinrichtung bereitgestellt werden. Die Energiekontrolleinrichtung kann somit in vorteilhafter Weise erst dann dem aufwändigen Umprogrammierprozess unterzogen werden, wenn durch die Überwachungseinrichtung nach Durchführung des Testzyklus bestätigt wurde, dass der Zustandswechsel über den Zwischenbetriebszustand tatsächlich energetisch günstiger ist.

Die Erfindung umfasst außerdem ein Produktionssystem mit einer Produktionsanlage, aufweisend eine Komponente, und mit der erfindungsgemäßen Vorrichtung oder einer vorteilhaften Ausführungsform davon.

Die Erfindung umfasst außerdem ein Verfahren zum Steuern eines Betriebszustandes zumindest einer Komponente einer Produktionsanlage, bei welchem ein Zustandsänderungssignal durch eine Energiekontrolleinrichtung zum Ändern des Betriebszustandes der zumindest einen Komponente von einem ersten Betriebszustand in einen zweiten Betriebszustand bereitgestellt wird. Darüber hinaus wird das Zustandsänderungssignal der Energiekontrolleinrichtung von einer Überwachungseinrichtung empfangen, und durch die Überwachungseinrichtung entweder das Zustandsänderungssignal der Energiekontrolleinrichtung zum Ändern des ersten Betriebszustandes in den zweiten Betriebszustand bereitgestellt oder das Zustandsänderungssignal der Energiekontrolleinrichtung zum Bereitstellen des zweiten Betriebszustandes modifiziert oder das Zustandsänderungssignal der Energiekontrolleinrichtung zum Verhindern des zweiten Betriebszustandes blockiert.

Die mit Bezug auf die erfindungsgemäße Vorrichtung vorgestellten bevorzugten Ausführungsformen und deren Vorteile gelten entsprechend für das erfindungsgemäße Produktionssystem sowie für das erfindungsgemäße Verfahren.

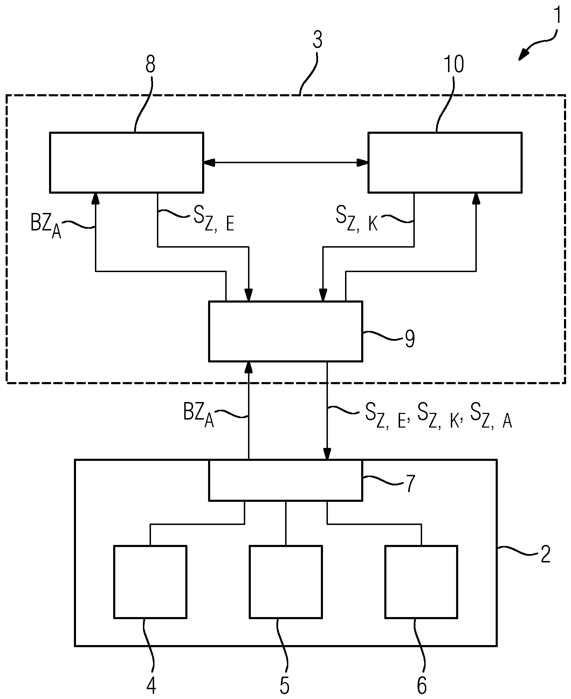

Im Folgenden wird die Erfindung nun anhand eines bevorzugten Ausführungsbeispiels wie auch unter Bezugnahme auf die beigefügte Zeichnung näher erläutert.

Es zeigt die einzige Figur eine schematische Darstellung einer Ausführungsform eines erfindungsgemäßen Produktionssystems.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Produktionssystem 1 mit einer Produktionsanlage 2 und einer Vorrichtung 3 zum Steuern von Betriebszuständen der Produktionsanlage 2. Die Produktionsanlage 2 umfasst hier drei Komponenten 4, 5, 6, welche beispielsweise als Maschinen oder Produktionszellen ausgestaltet sein können. Außerdem weist die Produktionsanlage 2 hier eine Schnittstelle 7, beispielsweise ein Steuergerät, auf, über welche die Komponenten 4, 5, 6 mit der Vorrichtung 3 kommunizieren können.

Die Vorrichtung 4 umfasst hier eine Energiekontrolleinrichtung 8, eine Überwachungseinrichtung 9 sowie eine übergeordnete Kontrolleinrichtung 10. Dabei kann die Energiekontrolleinrichtung 8 mit der Überwachungseinrichtung 9 bidirektional kommunizieren und die übergeordnete Kontrolleinrichtung 10 mit der Überwachungseinrichtung bidirektional kommunizieren. Dabei können die Energiekontrolleinrichtung 8, die Überwachungseinrichtung 9 und die übergeordnete Kontrolleinrichtung 10 entsprechende, hier nicht dargestellte Kommunikationsschnittstellen aufweisen.

Die Energiekontrolleinrichtung 8 ist dazu ausgelegt, basierend auf einem Strukturmodell der Produktionsanlage 2 jeweilige Zustandsänderungssignale S_{Z,E} bereitzustellen, wobei durch das jeweilige Zustandsänderungssignal S_{Z,E} ein zu der jeweiligen Komponente 4, 5, 6 korrespondierender Betriebszustand von einem ersten Betriebszustand in einem zweiten Betriebszustand verändert werden kann. Ein solcher Betriebszustand kann beispielsweise ein An-Zustand, ein Aus-Zustand, ein Standby-Zustand, ein Teillast-Betriebszustand oder ein Volllast-Betriebszustand sein, wobei die Komponenten 4, 5, 6 in den unterschiedlichen Betriebszuständen einen unterschiedlichen Energieverbrauch aufweisen.

Außerdem ist die übergeordnete Kontrolleinrichtung 10, welche beispielsweise ein Fertigungsmanagementsystem (MES) und/oder ein Produktionskontrollsystem und/oder ein Prozessüberwachungs- und steuerungssystem (SCADA) und/oder ein Lastmanagementsystem umfassen kann, dazu ausgelegt, weitere Zustandsänderungssignale S_{Z,K} zum Ändern des Betriebszustandes der jeweiligen Komponenten 4, 5, 6 bereitzustellen und an die Überwachungseinrichtung 9 zu versenden.

Die Überwachungseinrichtung 9 ist dazu ausgelegt, das jeweilige Zustandsänderungssignal S_{Z,E} der Energiekontrolleinrichtung 8 sowie das weitere Zustandsänderungssignal S_{Z,K} der übergeordneten Kontrolleinrichtung zu empfangen. Die Überwachungseinrichtung 9 kann das jeweilige Zustandsänderungssignal S_{Z,E} der Energiekontrolleinrichtung an die entsprechende Komponente 4, 5, 6 weiterleiten, sodass diese den ersten Betriebszustand in den zweiten Betriebszustand verändert. Außerdem kann die Überwachungseinrichtung 9 das Zustandsänderungssignal S_{Z,E} modifizieren, sodass die entsprechende Komponente 4, 5, 6 ihren Betriebszustand beispielsweise über einen Zwischenbetriebszustand in den zweiten Betriebszustand verändert. Dieses modifizierte Zustandsänderungssignal kann beispielsweise eine Abfolge aus mehreren Zustandsänderungssignalen umfassen. Auch kann die Überwachungseinrichtung das Zustandsänderungssignal S_{Z,E} blockieren, sodass die entsprechende Komponente 4, 5, 6 ihren Betriebszustand nicht in den zweiten Betriebszustand ändert. Anstelle des blockierten Zustandsänderungssignal S_{Z,E} kann die Überwachungseinrichtung 9 der jeweiligen Komponente 4, 5, 6 beispielsweise ein alternatives Zustandsänderungssignal S_{Z,A} bereitstellen, sodass diese ihren Betriebszustand in einen alternativen dritten Betriebszustand verändert, oder das weitere Zustandsänderungssignal S_{Z,K} der übergeordneten Überwachungseinrichtung 10 bereitstellen. Die Überwachungseinrichtung 9 überwacht und prüft also die Befehle bzw. Zustandsänderungen, welche von der Energiekontrolleinrichtung 8 verlangt werden, und setzt diese entweder um, verändert oder ignoriert sie.

Der Überwachungseinrichtung 9 kann der Energiekontrolleinrichtung 8 insbesondere die aktuellen Betriebszustände BZ_{A} der Komponenten 4, 5, 6 über die bidirektionale Kommunikationsschnittstelle mitteilen. Dazu kann die Überwachungseinrichtung 9 beispielsweise die aktuellen Betriebszustände BZ_{A} der Komponenten 4, 5, 6 über die Schnittstelle 7 auslesen und diese an die Energiekontrolleinrichtung 8 weiterleiten.

Das Auslesen des aktuellen Betriebszustandes BZ_{A} ist besonders vorteilhaft, da es vorgesehen sein kann, dass die Komponenten 4, 5, 6 und/oder die übergeordnete Kontrolleinrichtung 10 eigene Energiesparfunktionen aufweisen, durch welche ein Betriebszustand der Komponenten 4, 5, 6 verändert werden kann. Eine solche, durch die Energiesparfunktionen bereitgestellte Zustandsänderung kann der Energiekontrolleinrichtung 8 über die Überwachungseinrichtung 9 kommuniziert werden.

Auch kann die Überwachungseinrichtung 9 der Energiekontrolleinrichtung 8 ein Signal bereitstellen, durch welches die Energiekontrolleinrichtung 8 über ein Blockieren und/oder Modifizieren und/oder Ersetzen des Zustandsänderungssignals S_{Z,E} durch die Überwachungseinrichtung 9 informiert wird.

Der Energiekontrolleinrichtung 8 liegt also zu jederzeit der aktuelle Betriebszustand BZ_{A} der jeweiligen Komponente 4, 5, 6 vor. Somit ist die Energiekontrolleinrichtung 8 zu jederzeit mit den Komponenten 4, 5, 6 synchronisiert.

Die Überwachungseinrichtung 9 kann als ein separates Modul mit einer eigenen Logikschaltung zum Koordinieren der Zustandsänderungen sowie den notwendigen Kommunikationsschnittstellen zum Kommunizieren mit der Energiekontrolleinrichtung 8 und/oder der übergeordneten Kontrolleinrichtung 10 ausgestaltet sein. Es kann aber auch sein, dass die Überwachungseinrichtung 9 als Teil der Energiekontrolleinrichtung 8 oder der übergeordneten Kontrolleinrichtung 10 ausgestaltet ist.

Folgende Beispiele sollen die Funktionsweise der Vorrichtung 3 verdeutlichen:
Beispielsweise kann es sein, dass die Energiekontrolleinrichtung 8 das Zustandsänderungssignal S_{Z,E} versendet, um die Komponente 4 aus dem Standby-Zustand als den ersten Betriebszustand in einen Aus-Zustand als den zweiten Betriebszustand zu versetzen. Dies kann beispielsweise durch die Energiekontrolleinrichtung 8 zum Energiesparen vorgesehen sein, nachdem die Energiekontrolleinrichtung 8 erfasst hat, dass sich die Komponente 4 seit einer vorgegebenen Zeitdauer in dem Standby-Zustand befindet. Gleichzeitig versendet aber die übergeordnete Kontrolleinrichtung 10 das Zustandsänderungssignal S_{Z,K} , durch welches die Komponente 4 aus dem Standby-Zustand in einem An-Zustand versetzt werden soll, da die Komponente 4 beispielsweise einen Produktionsschritt übernehmen soll.

Die Überwachungseinrichtung 9 empfängt beide Zustandsänderungssignale S_{Z,E}, S_{Z,K} und entscheidet anhand einer vorgegebenen Prioritätenliste, welches der Zustandsänderungssignale S_{Z,E}, S_{Z,K} weitergeleitet werden soll. Wenn beispielsweise vorgesehen ist, dass das Zustandsänderungssignal S_{Z,K} der übergeordneten Kontrolleinrichtung 10 eine höhere Priorität aufweist, so wird das Zustandsänderungssignal S_{Z,K} der ubergeord neten Kontrolleinrichtung 10 weitergeleitet und das Zustandsänderungssignal S_{Z,K} der Energiekontrolleinrichtung 8 blockiert. Der Betriebszustand der Komponente 4 wird also in den An-Zustand verändert. Die Überwachungseinrichtung 9 teilt der Energiekontrolleinrichtung 8 mit, dass das Zustandsänderungssignal S_{Z,E} der Energiekontrolleinrichtung 8 blockiert wurde und dass der aktuelle Betriebszustand BZ_{A} der Komponente 4 nun der An-Zustand ist.

Auch kann es beispielsweise vorgesehen sein, dass die Energiekontrolleinrichtung 8 ein Zustandsänderungssignal S_{Z,E} bereitstellt, bei welchem der Betriebszustand der Komponente 4 von einem An-Zustand in einen Aus-Zustand verändert werden soll. Die Überwachungseinrichtung 9 stellt aber beispielsweise anhand einer vorgegebenen Liste fest, dass der Aus-Zustand der Komponente 4 nicht direkt aus dem An-Zustand erreichbar ist. Vielmehr muss die Komponente 4 zuerst in einen Zwischenbetriebszustand, beispielsweise den Standby-Zustand, und aus diesem Zwischenbetriebszustand in den Aus-Zustand versetzt werden. Die Überwachungseinrichtung 9 ist also dazu ausgelegt, das Zustandsänderungssignal S_{Z,E} der Energiekontrolleinrichtung 8 so zu modifizieren, dass die Komponente 4 beispielsweise durch ein erstes Zustandsänderungssignal aus dem An- Zustand in den Standby-Zustand versetzt wird und durch ein zweites Zustandsänderungssignal aus dem Standby-Zustand in den Aus- Zustand versetzt wird.

Auch kann vorgesehen sein, dass die Energiekontrolleinrichtung 8 ein Zustandsänderungssignal S_{Z,E} bereitstellt, bei welchem der Betriebszustand der Komponente 4 von einem An-Zustand in einem Aus-Zustand verändert werden soll. Die Überwachungseinrichtung 9 stellt fest, dass diese Zustandsänderung direkt, also ohne einen Zwischenbetriebszustand, möglich ist. Um jedoch zu überprüfen, ob es energetisch günstiger ist, die Komponente 4 zuerst in den Zwischenbetriebszustand, beispielsweise den Standby-Zustand, zu versetzen, kann die Überwachungseinrichtung 9 einen Testzyklus bereitstellen, bei welchem die Komponente 4 zuerst in den Zwischenbetriebszustand versetzt wird. Wenn die Überwachungseinrichtung 9 verifiziert hat, dass dieser Zustandswechsel über den Zwischenbetriebszustand energetisch günstiger ist, so kann die Energiekontrolleinrichtung 8 beispielsweise umprogrammiert werden, sodass diese zukünftig selbst das entsprechende Zustandsänderungssignal S_{Z,E} bereitstellt.

## Patentansprüche

1. Vorrichtung (3) zum Steuern eines jeweiligen Betriebszustandes mehrerer Komponenten (4, 5, 6) einer Produktionsanlage (2), mit einer Energiekontrolleinrichtung (8) zum Bereitstellen eines jeweiligen Zustandsänderungssignals (S_{Z,E}) zum Ändern des jeweiligen Betriebszustandes der entsprechenden Komponente (4, 5, 6) von einem ersten Betriebszustand in einen zweiten Betriebszustand, **dadurch gekennzeichnet, dass** die Vorrichtung (3) eine Überwachungseinrichtung (9) aufweist, welche dazu ausgelegt ist, das jeweilige Zustandsänderungssignal (S_{Z,E}) der Energiekontrolleinrichtung (8) für jede der mehreren Komponenten zu empfangen, und das jeweilige Zustandsänderungssignal (S_{Z,E}) der Energiekontrolleinrichtung (8) zum Ändern des ersten Betriebszustandes in den zweiten Betriebszustand für die jeweilige der mehreren Komponenten bereitzustellen und das Zustandsänderungssignal (S_{Z,E}) der Energiekontrolleinrichtung (8) zum Bereitstellen des zweiten Betriebszustandes zu modifizieren und das Zustandsänderungssignal (S_{Z,E}) der Energiekontrolleinrichtung (8) zum Verhindern einer Zustandsänderung in den zweiten Betriebszustand zu blockieren.

2. Vorrichtung (3) nach Anspruch 1, **dadurch gekennzeichnet, dass** die Überwachungseinrichtung (9) dazu ausgelegt ist, einen zu dem zweiten Betriebszustand alternativen dritten Betriebszustand bereitzustellen, falls die Überwachungseinrichtung (9) das jeweilige Zustandsänderungssignal (S_{Z,E}) der Energiekontrolleinrichtung (8) blockiert.

3. Vorrichtung (3) nach Anspruch 1 oder 2, **dadurch gekennzeichnet, dass** die Überwachungseinrichtung (9) dazu ausgelegt ist, der Energiekontrolleinrichtung (8) zum Synchronisieren der Energiekontrolleinrichtung (8) mit den mehreren Komponenten (4, 5, 6) einen jeweiligen aktuellen Betriebszustand (BZ_{A}) der jeweiligen Komponente (4, 5, 6) bereitzustellen.

4. Vorrichtung (3) nach einem der vorhergehenden Ansprüche, **dadurch gekennzeichnet, dass** die Überwachungseinrichtung (9) dazu ausgelegt ist, das jeweilige Zustandsänderungssignal (S_{Z,E}) der Energiekontrolleinrichtung (8) zu blockieren, falls das Ändern des ersten Betriebszustandes in den zweiten Betriebszustand als eine unerlaubte und/oder als eine unmögliche Zustandsänderung vorgegeben ist.

5. Vorrichtung (3) nach einem der vorhergehenden Ansprüche, **dadurch gekennzeichnet, dass** die Vorrichtung (3) eine übergeordnete Kontrolleinrichtung (10) aufweist, welche dazu ausgelegt ist, ein weiteres Zustandsänderungssignal (S_{Z,K}) bereitzustellen, und die Überwachungseinrichtung (9) dazu ausgelegt ist, mit der übergeordneten Kontrolleinrichtung (10) zu kommunizieren.

6. Vorrichtung (3) nach Anspruch 5, **dadurch gekennzeichnet, dass** die Überwachungseinrichtung (9) dazu ausgelegt ist, das jeweilige Zustandsänderungssignal (S_{Z,E}) der Energiekontrolleinrichtung (8) bereitzustellen und das weitere Zustandsänderungssignal (S_{Z,K}) der übergeordnete Kontrolleinrichtung (10) zu blockieren, falls das jeweilige Zustandsänderungssignal (S_{Z,E}) der Energiekontrolleinrichtung (8) eine vorgegebene, höhere Priorität als das weitere Zustandsänderungssignal (S_{Z,K}) der übergeordneten Kontrolleinrichtung (10) aufweist, und das weitere Zustandsänderungssignal (S_{Z,K}) der übergeordneten Kontrolleinrichtung (10) bereitzustellen und das jeweilige Zustandsänderungssignal (S_{Z,E}) der Energiekontrolleinrichtung (8) zu blockieren, falls das weitere Zustandsänderungssignal (S_{Z,K}) der übergeordneten Kontrolleinrichtung (10) die vorgegebene höhere Priorität aufweist.

7. Vorrichtung (3) nach einem der vorhergehenden Ansprüche, **dadurch gekennzeichnet, dass** die Überwachungseinrichtung (9) dazu ausgelegt ist, die Energiekontrolleinrichtung (8) zum Blockieren des jeweiligen Zustandsänderungssignals (S_{Z,E}) zu deaktivieren und/oder zum Bereitstellen des jeweiligen Zustandsänderungssignals (S_{Z,E}) zu aktivieren.

8. Vorrichtung (3) nach Anspruch 7, **dadurch gekennzeichnet, dass** die Energiekontrolleinrichtung (8) nach der Aktivierung dazu ausgelegt ist, den jeweiligen aktuellen Betriebszustand (BZ_{A}) der mehreren Komponenten (4, 5, 6) auszulesen.

9. Vorrichtung (3) nach einem der vorhergehenden Ansprüche, **dadurch gekennzeichnet, dass** die Überwachungseinrichtung (9) dazu ausgelegt ist, eine Zustandsänderungszeit der Zustandsänderung von dem ersten Betriebszustand in den zweiten Betriebszustand zu überwachen, und, falls die Zustandsänderungszeit einen vorbestimmten Schwellwert überschreitet, das zugehörige Zustandsänderungssignal (S_{Z,E}) als ein unmögliches und/oder unerlaubtes Zustandsänderungssignal festzulegen.

10. Vorrichtung (3) nach einem der vorhergehenden Ansprüche, **dadurch gekennzeichnet, dass** die Überwachungseinrichtung (9) dazu ausgelegt ist, zum Modifizieren des jeweiligen Zustandsänderungssignals (S_{Z,E}) der Energiekontrolleinrichtung (8) zumindest einen Zwischenbetriebszustand bereitzustellen, falls der zweite Betriebszustand von dem ersten Betriebszustand aus nur über den zumindest einen Zwischenbetriebszustand erreichbar ist.

11. Vorrichtung (3) nach einem der vorhergehenden Ansprüche, **dadurch gekennzeichnet, dass** die Überwachungseinrichtung (9) dazu ausgelegt ist, das jeweilige Zustandsänderungssignal (S_{Z,E}) zum Durchführen eines Testzyklus zu modifizieren.

12. Produktionssystem (1) mit einer Produktionsanlage (2), aufweisend zumindest eine Komponente (4, 5, 6), und mit einer Vorrichtung (3) nach einem der vorhergehenden Ansprüche.

13. Verfahren zum Steuern eines jeweiligen Betriebszustandes mehrerer Komponenten (4, 5, 6) einer Produktionsanlage (2), bei welchem ein jeweiliges Zustandsänderungssignal (S_{Z,E}) durch eine Energiekontrolleinrichtung (8) zum Ändern des jeweiligen Betriebszustandes der entsprechenden Komponente (4, 5, 6) von einem ersten Betriebszustand in einen zweiten Betriebszustand bereitgestellt wird, **dadurch gekennzeichnet, dass** das jeweilige Zustandsänderungssignal (S_{Z,E}) der Energiekontrolleinrichtung (8) von einer Überwachungseinrichtung (9) für jede der mehreren Komponenten (4, 5, 6) empfangen wird, und durch die Überwachungseinrichtung (9) entweder das jeweilige Zustandsänderungssignal (S_{Z,E}) der Energiekontrolleinrichtung (8) zum Ändern des ersten Betriebszustandes in den zweiten Betriebszustand für die jeweilige der mehreren Komponenten bereitgestellt wird oder das jeweilige Zustandsänderungssignal (S_{Z,E}) der Energiekontrolleinrichtung (8) zum Bereitstellen des zweiten Betriebszustandes modifiziert wird oder das jeweilige Zustandsänderungssignal (S_{Z,E}) der Energiekontrolleinrichtung (8) zum Verhindern des zweiten Betriebszustandes blockiert wird.

## Claims

1. Device (3) for controlling a respective operating state of a plurality of components (4, 5, 6) of a production plant (2), having an energy control device (8) for providing a respective state change signal (S_{Z,E}) for changing the respective operating state of the corresponding component (4, 5, 6) from a first operating state into a second operating state, **characterized in that** the device (3) has a monitoring device (9) which is designed to receive the respective state change signal (S_{Z,E}) of the energy control device (8) for each of the plurality of components and to provide the respective state change signal (S_{Z,E}) of the energy control device (8) for changing the first operating state into the second operating state for the respective one of the plurality of components, and to modify the state change signal (S_{Z,E}) of the energy control device (8) for providing the second operating state and to block the state change signal (S_{Z,E}) of the energy control device (8) for preventing a state change into the second operating state.

2. Device (3) according to Claim 1, **characterized in that** the monitoring device (9) is designed to provide a third operating state alternative to the second operating state if the monitoring device (9) blocks the respective state change signal (S_{Z,E}) of the energy control device (8).

3. Device (3) according to Claim 1 or 2, **characterized in that** the monitoring device (9) is designed to provide the energy control device (8), for synchronizing the energy control device (8) with the plurality of components (4, 5, 6), with a respective current operating state (BZ_{A}) of the respective component (4, 5, 6).

4. Device (3) according to one of the preceding claims, **characterized in that** the monitoring device (9) is designed to block the respective state change signal (S_{Z,E}) of the energy control device (8) if the changing of the first operating state into the second operating state is predetermined as an unallowed and/or as an impossible state change.

5. Device (3) according to one of the preceding claims, **characterized in that** the device (3) has a higher-level control device (10) which is designed to provide a further state change signal (S_{Z,K}) and the monitoring device (9) is designed to communicate with the higher-level control device (10).

6. Device (3) according to Claim 5, **characterized in that** the monitoring device (9) is designed to provide the respective state change signal (S_{Z,E}) of the energy control device (8) and to block the further state change signal (S_{Z,K}) of the higher-level control device (10) if the respective state change signal (S_{Z,E}) of the energy control device (8) has a predetermined, higher priority than the further state change signal (S_{Z,K}) of the higher-level control device (10), and to provide the further state change signal (S_{Z,K}) of the higher-level control device (10) and to block the respective state change signal (S_{Z,E}) of the energy control device (8) if the further state change signal (S_{Z,K}) of the higher-level control device (10) has the predetermined higher priority.

7. Device (3) according to one of the preceding claims, **characterized in that** the monitoring device (9) is designed to deactivate the energy control device (8) for blocking the respective state change signal (S_{Z,E}) and/or to activate the energy control device (8) for providing the respective state change signal (S_{Z,E}).

8. Device (3) according to Claim 7, **characterized in that** the energy control device (8), after activating, is designed to read out the respective current operating state (BZ_{A}) of the plurality of components (4, 5, 6).

9. Device (3) according to one of the preceding claims, **characterized in that** the monitoring device (9) is designed to monitor a state change time of the state change from the first operating state into the second operating state and, if the state change time exceeds a predetermined threshold value, to specify the associated state change signal (S_{Z,E}) as an impossible and/or unauthorized state change signal.

10. Device (3) according to one of the preceding claims, **characterized in that** the monitoring device (9) is designed to provide at least one intermediate operating state for modifying the respective state change signal (S_{Z,E}) of the energy control device (8), if the second operating state can only be reached via the at least one intermediate operating state from the first operating state.

11. Device (3) according to one of the preceding claims, **characterized in that** the monitoring device (9) is designed to modify the respective state change signal (S_{Z,E}) for performing a test cycle.

12. Production system (1) having a production plant (2) having at least one component (4, 5, 6) and having a device (3) according to one of the preceding claims.

13. Method for controlling a respective operating state of a plurality of components (4, 5, 6) of a production plant (2) in which a respective state change signal (S_{Z,E}) is provided by an energy control device (8) for changing the respective operating state of the corresponding component (4, 5, 6) from a first operating state into a second operating state, **characterized in that** the respective state change signal (S_{Z,E}) of the energy control device (8) is received by a monitoring device (9) for each of the plurality of components (4, 5, 6), and by the monitoring device (9) either the respective state change signal (S_{Z,E}) of the energy control device (8) is provided for changing the first operating state into the second operating state for the respective one of the plurality of components or the respective state change signal (S_{Z,E}) of the energy control device (8) is modified for providing the second operating state or the respective state change signal (S_{Z,E}) of the energy control device (8) is blocked for preventing the second operating state.

## Revendications

1. Système (3) de commande d'un état de fonctionnement de plusieurs éléments (4, 5, 6), une installation (2) de production, comprenant un dispositif (8) de contrôle d'énergie pour disposer d'un signal (S_{Z,E}) de variation d'état, afin de faire passer l'état de fonctionnement des éléments (4, 5, 6) correspondants d'un premier état de fonctionnement à un deuxième état de fonctionnement, **caractérisé en ce que** le système (3) a un dispositif (9) de surveillance conçu pour recevoir le signal (S_{Z,E}) de variation d'état du dispositif (8) de contrôle d'énergie pour chacun des plusieurs éléments et pour mettre à disposition le signal (S_{Z,E}) de variation d'état du dispositif (8) de contrôle d'énergie pour faire passer le composant respectif du premier état de fonctionnant au deuxième état de fonctionnement et pour modifier le signal (S_{Z,E}) de variation d'état du dispositif (8) de contrôle d'énergie pour passer dans le deuxième état de fonctionnement et pour bloquer le signal (S_{Z,E}) de variation d'état du dispositif (8) de contrôle d'énergie afin d'empêcher de passer dans le deuxième état de fonctionnement.

2. Système (3) suivant la revendication 1, **caractérisé en ce que** le dispositif (9) de surveillance est conçu pour passer dans un troisième état de fonctionnement en alternance au deuxième état de fonctionnement, si le dispositif (9) de surveillance bloque le signal (S_{Z,E}) de variation d'état respectif du dispositif (8) de contrôle d'énergie.

3. Système (3) suivant la revendication 1 ou 2, **caractérisé en ce que** le dispositif (9) de surveillance est conçu pour mettre à disposition du dispositif (8) de contrôle d'énergie, afin de synchroniser le dispositif (8) de contrôle d'énergie avec les plusieurs éléments (4, 5, 6), un état (BZ_{A}) de fonctionnement instantané respectif de l'élément ((4, 5, 6) respectif.

4. Système (3) suivant l'une des revendications précédentes, **caractérisé en ce que** le dispositif (9) de surveillance est conçu pour bloquer le signal (S_{Z,E}) de variation d'état respectif du dispositif (8) de contrôle d'énergie, si le passage du premier état de fonctionnement au deuxième état de fonctionnement est prescrit comme interdit et/ou comme impossible.

5. Système (3) suivant l'une des revendications précédentes, **caractérisé en ce que** le système (3) a un dispositif (10 ) de contrôle supérieur hiérarchiquement conçu pour disposer d'un autre signal (S_{Z,E}) de variation d'état, et le dispositif (9) de surveillance est conçu pour communiquer avec le dispositif (10) de contrôle supérieur hiérarchiquement.

6. Système (3) suivant la revendication 5, **caractérisé en ce que** le dispositif (9) de surveillance est conçu pour mettre le signal (S_{Z,E}) de variation d'état à disposition du dispositif (8) de commande d'énergie et pour bloquer l'autre signal (S_{Z,E}) de variation d'état du dispositif (10) de contrôle supérieur hiérarchiquement, si le signal (S_{Z,E}) de variation d'état respectif du dispositif (8) de commande d'énergie a une priorité plus grande donnée à l'avance que l'autre signal (S_{Z,E}) de variation d'état du dispositif (10 ) de contrôle supérieur hiérarchiquement et pour mettre l'autre signal (S_{Z,E}) de variation d'état à disposition du dispositif (10) de contrôle supérieur hiérarchiquement et bloquer le signal (S_{Z,E}) de variation d'état respectif du dispositif (8) de contrôle d'énergie, si l'autre signal (S_{Z,E}) de variation d'état du dispositif (8) de contrôle d'énergie supérieur hiérarchiquement a la priorité plus grande donnée à l'avance.

7. Système (3) suivant l'une des revendications précédentes, **caractérisé en ce que** le dispositif (9) de surveillance est conçu pour désactiver le dispositif (8) de contrôle d'énergie, afin de bloquer le signal (S_{Z,E}) de variation d'état respectif et/ou pour l'activer, afin de mettre à disposition le signal (S_{Z,E}) de variation d'état respectif.

8. Système (3) suivant la revendication 7, **caractérisé en ce que** le dispositif (8) de contrôle d'énergie est conçu pour, après l'activation, lire l'état (BZ_{A}) de fonctionnement instantané respectif des plusieurs éléments (4, 5, 6).

9. Système (3) suivant l'une des revendications précédentes, **caractérisé en ce que** le dispositif (9) de surveillance est conçu pour surveiller un temps de passage de l'état de fonctionnement au deuxième état de fonctionnement, et, si le temps de passage dépasse une valeur de seuil déterminée à l'avance, pour constater que le signal (S_{Z,E}) de variation d'état associé est un signal de variation d'état impossible et/ou interdit.

10. Système (3) suivant l'une des revendications précédentes, **caractérisé en ce que** le dispositif (9) de surveillance est conçu pour, afin de modifier le signal (S_{Z,E}) de variation d'état respectif, mettre à disposition du dispositif (8) de contrôle d'énergie au moins un état de fonctionnement intermédiaire, si le deuxième état de fonctionnement ne peut, à partir du premier état de fonctionnement, être atteint que par le au moins un état de fonctionnement intermédiaire.

11. Système (3) suivant l'une des revendications précédentes, **caractérisé en ce que** le dispositif (9) de surveillance est conçu pour modifier le signal (S_{Z,E}) de variation d'état respectif, afin d'effectuer un cycle de tests.

12. Système (1) de production ayant une installation (2) de production, comportant au moins un élément (4, 5, 6), et un système (3) suivant l'une des revendications précédentes.

13. Procédé de commande d'un état de fonctionnement respectif de plusieurs éléments (4, 5, 6) d'une installation (2) de production, dans lequel on met à disposition un signal (S_{Z,E}) de variation d'état respectif par un dispositif (8) de contrôle d'énergie, afin de modifier l'état de fonctionnement d'un élément (4, 5, 6) correspondant d'un premier état de fonctionnement à un deuxième état de fonctionnement, **caractérisé en ce que** l'on reçoit, d'un dispositif (9) de surveillance pour chacun des plusieurs éléments (4, 5, 6), le signal (S_{Z,E}) de variation d'état respectif du dispositif (8) de contrôle d'énergie et, par le dispositif (9) de surveillance, on met à disposition ou bien le signal (S_{Z,E}) de variation d'état respectif de l'unité (8) de contrôle d'énergie, pour faire passer du premier état de fonctionnement au deuxième état de fonctionnement, celui respectif des plusieurs éléments ou bien on modifie le signal (S_{Z,E}) de variation d'état du dispositif (8) de contrôle d'énergie pour passer au deuxième état de fonctionnement ou bien on modifie le signal (S_{Z,E}) de variation d'état du dispositif (8) de contrôle d'énergie pour empêcher de passer dans le deuxième état de fonctionnement.
